# EUROPEAN PATENT APPLICATION

(11) **EP 1 447 168 A2**
(43) Date of publication of application: **18.08.2004**
(21) Application number: 04002610.6
(22) Date of filing: 05.02.2004
(51) Int. Cl.: B23K 26/14

(54) **Laser beam machine**

(30) Priority: 17.02.2003 JP 2003038857
(71) Applicant: YAMAZAKI MAZAK KABUSHIKI KAISHA, Niwa-Gun, Aichi-Ken (JP)
(72) Inventor: Yoshihiro, Mutoh, Mino-shi Gifu-ken (JP); Masaki, Itoh, Fusuka Niwa-gun (JP); Tetsuichi, Kitamoto, Kani-shi Gifu-ken (JP); Yoshihiro, Nagata, Hashima-gun Gifu-ken (JP)
(74) Representative: Bauer, Wulf, Dr.

(57) **Abstract**

Laser beam radiating means has a center electrode at an inner periphery of an annular electrode. Center electrode potential control means controls potential of the center electrode so as to keep zero (0) or positive constant voltage, so that it is possible to absorb charged particles in plasma generating by radiation of laser beam through the center electrode, and dispersion of plasma can be restricted thereby. Even if a large volume of plasma is generated, a line of electric force from the annular electrode is not disturbed by plasma, and the variation of capacitance generating between the annular electrode and a workpiece can be prevented, thereby.

## Description

### BACKGROUND OF THE INVENTION

The present invention relates to a laser beam machine for executing cutting machining on a workpiece. More specifically, the present invention relates to a laser beam machine for controlling a gap length between a top end of a torch and a workpiece on the basis of capacitance between an annular electrode which is provided at the torch and the workpiece.

Such kind of a conventional laser beam machine has an annular electrode provided at a torch for radiating laser beam, and has a surface following control function for controlling so as to keep the focus position of laser beam at a predetermined position on a workpiece to be focused, relatively moving and driving the torch with respect to the workpiece by constantly controlling a gap length between the top end of the torch and the workpiece on the basis of capacitance generating between the annular electrode and the workpiece.

But, the capacitance varies irrespective of the gap length since plasma comprised of charged particles, such as ions and electrons, is generated from a machining point when radiating laser beam on the workpiece, so that sometimes, the above-mentioned surface following control does not normally function. On the contrary, another laser beam machine having an annular electrode located away from a machining point, such as a first patent application reference (Publication No. S64-22490, Pages 6-8, Fig. 1) , has been proposed. In this laser beam machine, but plasma approaches the annular electrode if a large volume of plasma is generated, and the capacitance varies thereby, inconveniently similar to the above-mentioned laser beam machine.

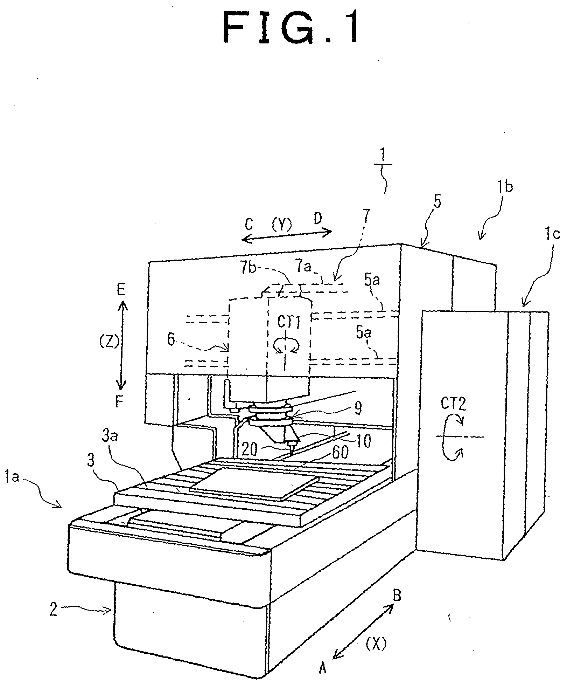

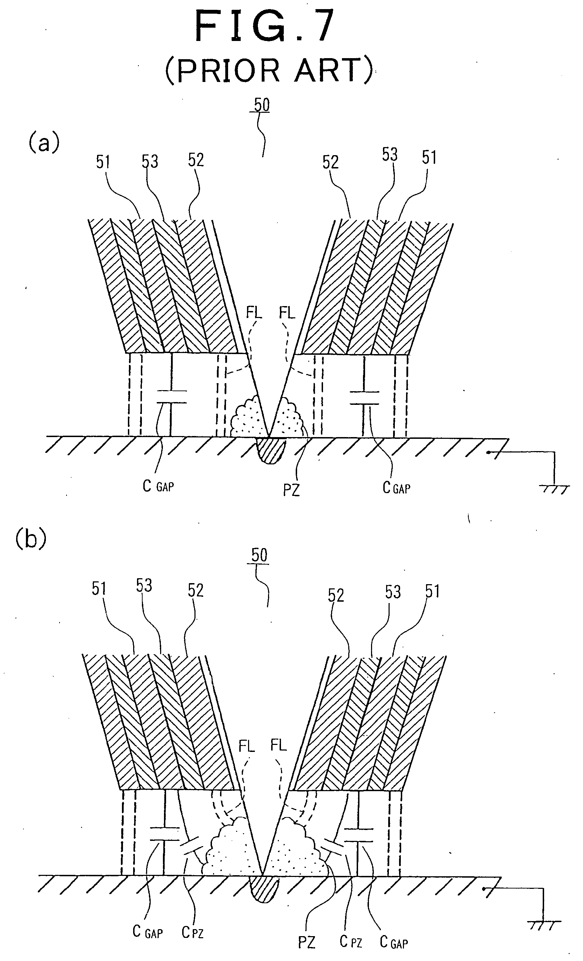

Under this situation, another laser beam has been proposed, such as a second patent application reference (Publication No.H03-165989, Pages 7-9, Fig.1). In this laser beam machine, a guard electrode 52 is located at an inner periphery of an annular electrode 51 provided at the torch 50 through an insulating layer 53, as shown in Fig.7(a), and the guard electrode 52 is supplied with high frequency voltage so as to generate a line of electric force. FL by the high frequency voltage, so that capacitance C_{GAP} can be electrically excluded from plasma PZ in order to prevent the variation of the capacitance C_{GAP} by the plasma PZ .

In such a laser beam machine also, but, the surface following control does not normally function, similar to the above-mentioned cases since the line of electric force FL by high frequency voltage is attracted in the plasma PZ if a large volume of plasma PZ is generated as shown in Fig.7(b), so that the capacitance C_{GAP} can not be fully excluded from the plasma PZ, and capacitance C_{PZ} for varying the capacitance C_{GAP} is generated between the annular electrode 51 and the plasma PZ.

Under the circumstances, development of a laser beam machine through which the surface following control can normally function even if a large volume of plasma is generated due to radiation of laser beam, has been desired.

### SUMMARY OF THE INVENTION

The present invention is a laser beam machine having laser beam radiating means for radiating laser beam on a workpiece, the laser beam radiating means having an opening for the laser beam and an annular electrode facing the workpiece provided at an outer periphery of the opening, the laser beam machine further having gap length control means for controlling gap length between the laser beam radiating means and the workpiece on the basis of capacitance generating between the annular electrode and the workpiece, comprising:
the laser beam radiating means having a center electrode at an inner periphery of the annular electrode; and
center electrode potential control means for controlling potential of the center electrode so as to keep zero (0) or a positive constant voltage.

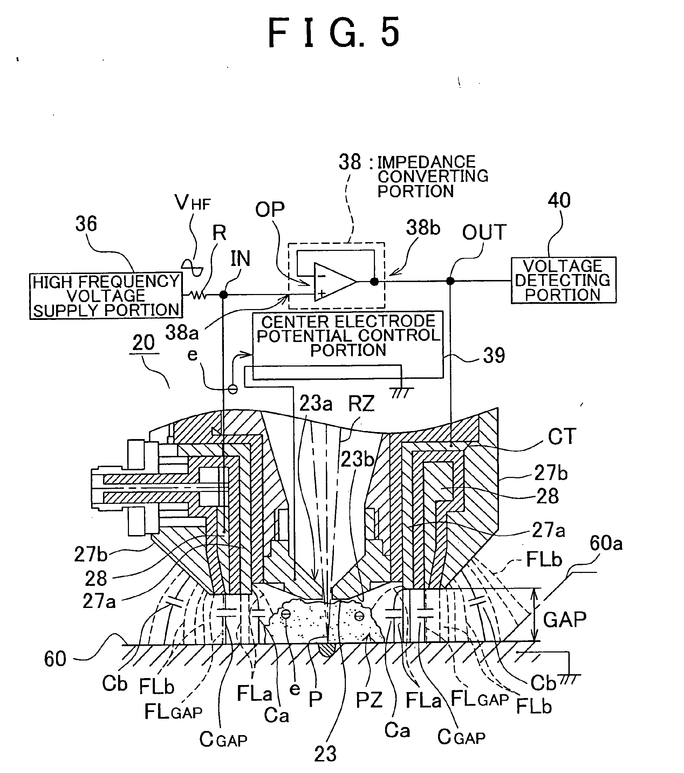

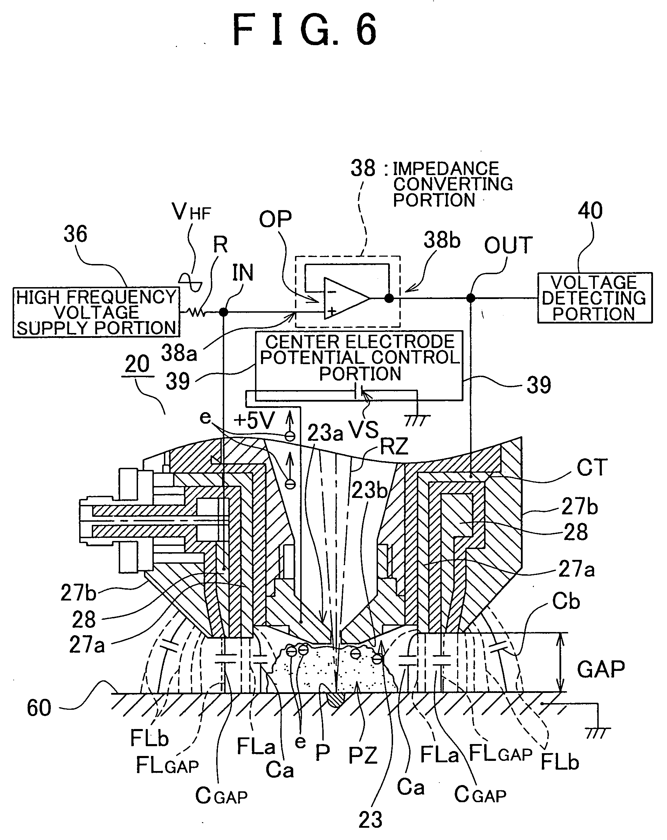

According to this aspect of the invention, the laser beam radiating means has the center electrode at the inner periphery of the annular electrode, and the center electrode potential control means controls the potential of the center electrode so as to keep zero (0) or a positive constant voltage, so that the charged particles (such as electrons and ions) in the plasma generated owing to radiation of laser beam which is on the center electrode which was controlled so as to keep the constant voltage can be absorbed through the center electrode, and the dispersion of plasma in the space between the laser beam radiating means and the workpiece can be restricted, thereby. By doing so, the line of electric force from the annular electrode (such as FL_{GAP} as shown Figs. 5 and 6) is not disturbed by the plasma even if a large volume of plasma is generated, and the variation of the capacitance generating between the annular electrode and the workpiece can be prevented. And, the gap length control means can control the gap length between the laser beam radiating means and the workpiece with no error operation.

If the potential of the center electrode is controlled so as to keep the positive constant voltage, the charged particles, such as electrons and minus ions, dispersed in the space between the laser beam radiating means and the workpiece can be absorbed through the center electrode which was controlled so as to keep the positive constant voltage in addition to the charged particles on the center electrode, so that the dispersion of the plasma in the space between the laser beam radiating means and the workpiece can be further restricted.

Another aspect of the invention is the laser beam machine, wherein the center electrode has a workpiece facing surface concentrically formed with the opening for the laser beam as its center.

According to this aspect of the invention, the center electrode has the workpiece facing face which is concentrically formed with the opening for laser beam as its center, so that the charged particles of the plasma almost concentrically dispersed from the machining point facing the opening (such as P as shown in Figs.5 and 6) are absorbed through the workpiece facing face, and the dispersion of the plasma can be effectively restricted.

Besides, the another aspect of the invention is the laser beam machine, wherein the laser beam radiating means has a first guard annular electrode which intervenes between the center electrode and the annular electrode, an impedance converting means is provided, having an input portion input impedance of which is infinity (∞) for connecting with the annular electrode and an output portion output impedance of which is zero (0) for connecting with the first guard annular electrode, and high frequency voltage supply means for supplying the annular electrode with high frequency voltage is provided.

According to this aspect of the invention, the laser beam radiating means has the first guard annular electrode which intervenes between the center electrode and the annular electrode, and the impedance converting means has the input portion input impedance of which is infinity ( ∞ ) for connecting with the annular electrode and the output portion output impedance of which is zero (0) for connecting with the first guard annular electrode. The high frequency voltage supply means supplies the annular electrode with high frequency voltage, and the predetermined voltage (such as V_{GAP}) by the supplied high frequency voltage is applied on the annular electrode and the first guard annular electrode through the input portion and the output portion of the impedance converting means, so that it is possible to prevent the predetermined voltage (such as V_{GAP}) from varying even if the capacitance (such as Ca as shown in Figs.5 and 6) generating between the first guard annular electrode and the workpiece varies. By doing so, the line of electric force (such as FLa as shown in Figs.5 and 6) from the first guard annular electrode can intervene between plasma and the capacitance generating between the annular electrode and the workpiece. Then, the line of electric force (such as FL_{GAP} as shown in Figs. 5 and 6) from the annular electrode does not flow into the plasma, and the variation of the capacitance generating between the annular electrode and the workpiece can be further prevented.

The line of electric force (such as FLa as shown in Figs.5 and 6) from the first guard annular electrode is generated by high frequency voltage, so that the charged particles in the plasma can be restricted in the space between the laser beam radiating means and the workpiece without giving the charged particles constant Coulomb's force, and the dispersion of the plasma can be restricted thereby.

Another aspect of the invention is the laser beam machine, wherein the laser beam radiating means has a second guard annular electrode which is connected with the output portion of the impedance converting means at an outer periphery of the annular electrode.

According to this aspect of the invention, the laser beam radiating means has the second guard annular electrode which is connected with the output portion of the impedance converting means at the outer periphery of the annular electrode, and the predetermined voltage (such as V_{GAP}) by the high frequency voltage supplied from the high frequency voltage supply means is applied on the second guard annular electrode in addition to on the annular electrode and the first guard annular electrode, so that the line of electric force from the annular electrode (such as FL_{GAP} as shown in Figs.5 and 6) can flow 'into the workpiece from a normal direction. Therefore, the capacitance generating between the annular electrode and the workpiece can be changed according to only gap length, and the gap length control means can control the gap length with high accuracy.

### BRIEF DESCRIPTION OF THE DRAWINGS

Fig. 1 is a perspective view showing the whole laser beam machine to which the invention is applied;
Fig.2 is a view showing a torch, wherein (a) is a schematic side view (a sectional view in a part) and (b) is a schematic bottom view;
Fig.3 is a block diagram showing a control unit;
Fig.4 is a schematic circuit view in surroundings of an impedance converting portion and a center electrode potential control portion;
Fig.5 is a view showing surface following control according to the invention, and is an explanation view at the time when a center electrode 23 is earthed;
Fig.6 is a view showing the surface following control according to the invention, and is an explanation view in case where the center electrode is controlled to keep a positive potential; and
Fig. 7 is an explanation view of the surface following control according to a conventional laser beam machine, wherein (a) is a view at the time when a small volume of plasma is generated and (b) is a view at the time when a large volume of plasma is generated.

### DESCRIPTION OF THE PREFERRED EMBODIMENTS

Fig.1 is a laser beam machine 1 which is an embodiment of the present invention. The laser beam machine 1 to which the invention is applied is a CNC unit for machining (NC cutting machine) , for instance. The laser beam machine 1 has a workpiece stationing unit 1a, a laser beam radiating unit 1b and a control unit 1c. The laser beam radiating unit 1b is located on the workpiece stationing unit 1a, and the control unit 1c is provided, attaching to the workpiece stationing unit 1a and the laser beam radiating unit 1b.

The workpiece stationing unit 1a has a base 2 for fixing the laser beam machine 1 on a floor, and a table 3 is located on an upper face of the base 2. The table 3 has a horizontal workpiece location surface 3a for putting the workpiece 70 thereon, and the workpiece location surface 3a freely moves and drives in a direction as shown by arrows A and B (X-axis direction) with respect to the base 2 by a proper driving motor (not shown). And, the workpiece location surface 3a is provided with earthing process means (not shown) for earthing the located workpiece 60.

The laser beam radiating unit 1b has a column 5 and the column 5 is fixed on the base 2, bridging over the table 3 which can move in the X-axis direction so as not to interfere with the table 3. And, the column 5 has rails for saddle 5a, 5a along a horizontal direction as shown by arrows C and D perpendicular to the X-axis direction (a Y-axis direction), and the rails for saddle 5a, 5a are provided with a saddle 6 which freely moves and drives in the Y-axis direction with respect to the column 5 by a proper driving motor (not shown).

Inside the saddle 6, a machining head body (not shown) is provided, and the machining head body freely moves and drives in a direction as shown by arrows E and F perpendicular to the X-axis and Y-axis directions (a Z-axis direction) with respect to the column 5 by a proper driving motor (not shown).

The column 5 has a laser beam oscillator (not shown) at a position on the arrow B side of Fig. 1 rather than the saddle 6. Laser beam medium of the laser beam oscillator is a CO₂ (carbon dioxide) or YAG (yttrium /alminium /monocrystal garnet) . The laser beam oscillator freely oscillates and ejects through the medium. Besides, the later beam oscillator is connected with the machining head body through a laser beam path tube 7.

The laser beam path tube 7 has a path tube 7a (only a part of which is shown in the figure with a broken line) connected with the laser beam oscillator, and an expandable tube 7b for connecting the path tube 7a and the machining head body with each other in the direction as shown by the arrows A and B. The expandable tube 7b has a telescopic mechanism for expanding together with a movement between the saddle 6 and the path tube 7a. That is, the laser beam oscillated and ejected by the laser beam oscillator can reach the machining head body inside the saddle 6, passing through an inside of the path tube 7a of the laser beam path tube 7, and then passing through an inside of the expandable tube 7b.

The machining head body has an outside sleeve member 9, and the outside sleeve member 9 is supported by an axis so as to be rotated, driven and positioned with respect to the machining head body with an axial center CT1 parallel to the Z-axis as its center by a proper driving motor (not shown). The outside sleeve member 9 is provided with a rotating top end member 10, and the rotating top end member 10 is supported by an axis so as to be freely rotated, driven and positioned with respect to the outside sleeve member 9 with a horizontal axial center CT2 perpendicular to the axial center CT1 as its center by a proper driving motor (not shown). The rotating top end member 10 is provided with a torch 20 which can face the workpiece location surface 3a at right angles thereto. And, the torch 20 is provided with a servo motor (not shown) , and the torch 20 freely moves and is freely positioned in the vertical direction in the figure through the servo motor.

A proper reflecting mirror (not shown) is provided inside the outside sleeve member 9 and the rotating top end member 10. This reflecting mirror is for passing the laser beam, which reached the machining head body and passed through the inside of the machining head body, through the insides of the outside sleeve member 9, the rotating top end member 10 and the torch 20, and for radiating the laser beam on the workpiece 60 from the normal line direction.

A proper converging lens (not shown) is provided inside the outside sleeve member 9, and the converging lens can converge the laser beam on a predetermined position on the workpiece 60 to be converged. The torch 20 is provided with assist gas evolution means (not shown) connected with a bomb of assist gas, such as nitrogen. The assist gas evolution means freely evolve assist gas to the workpiece 60.

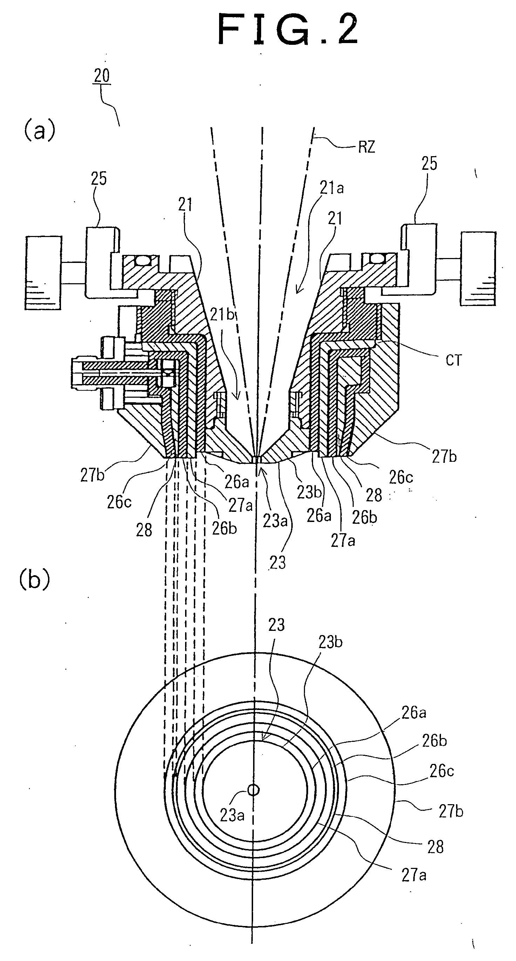

Fig.2 shows the torch wherein (a) is a schematic side view (a sectional view in a part) and (b) is a schematic bottom view. As shown in Fig.2 (a) , the torch 20 is provided with an inside sleeve member 21 having a hollow portion 21a in the shape of almost a cone so as not to obstruct the converged laser beam RZ (shown with a two-dot chain line). The inside sleeve member 21 is engaged with the rotating top end member 10 as shown in Fig.1 through a holding portion 25. On the lower hand of the inside sleeve member 21 in the figure, an opening portion 21b is provided, and a center electrode 23 is fitted in the opening portion 21b.

The center electrode 23 is comprised of proper conductive material, and is almost cylindrically formed. This cylindrical center electrode 23 is open on the upper side in the figure so as not to obstruct the laser beam RZ (shown with a two-dot chain line) , similar to the inside sleeve member 21. As shown in Fig.2 (b) , a plasma opposed face 23b almost cylindrically formed is provided on the lower hand of the cylindrical center electrode in the figure, and an opening 23a for the laser beam RZ is provided at the center of the plasma opposed face 23b.

A first guard electrode 27a is provided at the outer periphery of the center electrode 23 through an insulating layer 26a comprised of proper material. The first guard electrode 27a is comprised of proper conductive material, and is almost cylindrically formed, as shown in Fig.2(a). A sensor electrode 28 is provided at the outer periphery of the first guard electrode 27a through an insulating layer 26b. Similar to the first guard electrode 27a, the sensor electrode 28 is comprised of proper conductive material, and is almost cylindrically formed, as shown in Fig.2(a). And, a second guard electrode 27b is provided at the outer periphery of the sensor electrode 28 through an insulating layer 26c. Similar to the first guard electrode 27a and the sensor electrode 28, the second guard electrode 27b is also comprised of proper conductive material, and is almost cylindrically formed, as shown in Fig.2 (a) . The first guard electrode 27a is electrically connected with the second guard electrode 27b through a contacting portion CT.

That is, the first guard electrode 27a, the sensor electrode 28 and the second guard electrode 27b are respectively annularly formed, as shown in Fig.2 (b) . That is, the torch 20 is comprised of the plasma opposed face 23b of the center electrode 23, the insulating layer 26a, the first guard electrode 27a, the insulating layer 26b, the sensor electrode 28, the insulating layer 26c and the second guard electrode 27b, concentrically in this order with the opening 23a of the center electrode 23 as its center. In the following explanation, the first guard electrode 27a and the second guard electrode 27b are referred to as only "the guard electrodes 27a, 27b" if both are not necessary to be discriminated from each other.

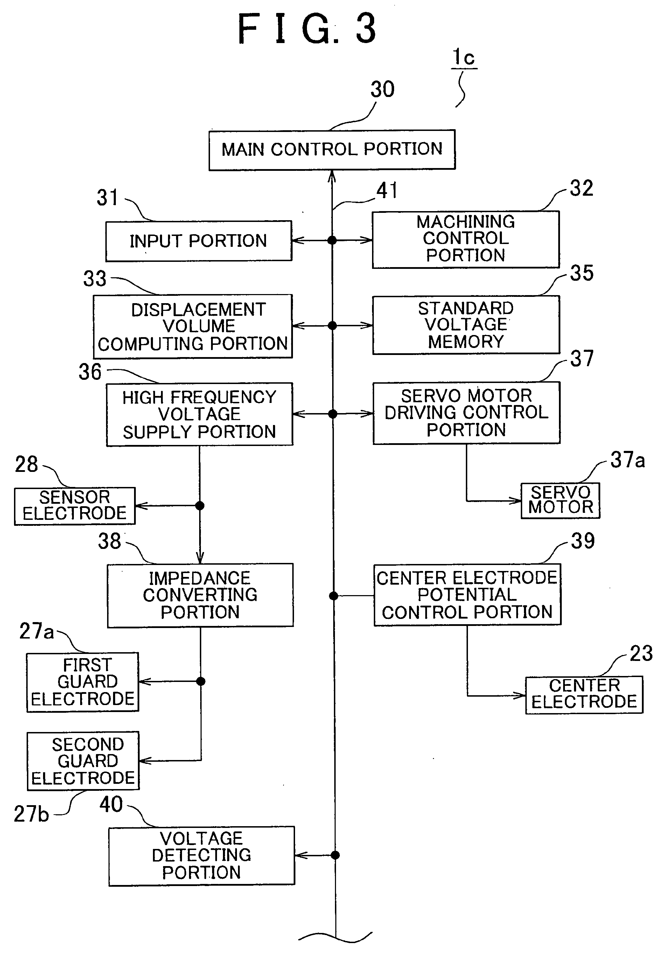

Fig.3 is a block diagram showing the control unit 1c. The control unit 1c of the laser beam machine 1 has a main control portion 30, as shown in Fig.3. An input portion 31, such as a keyboard, a machining control portion 32, a displacement volume computing portion 33, a standard voltage memory 35, a high frequency voltage supply portion 36, a servo motor driving control portion 37, a center electrode potential control portion 39, a voltage detecting portion 40 are connected with the main control portion 30 via a bus line 41.

A servo motor 37a is connected with the servo motor driving control portion 37. The sensor electrode 28 is connected with the high frequency voltage supply portion 36, and is connected with the first guard electrode 27a and the second guard electrode 27b through an impedance converting portion 38. The center electrode 23 is connected with the center electrode potential control portion 39.

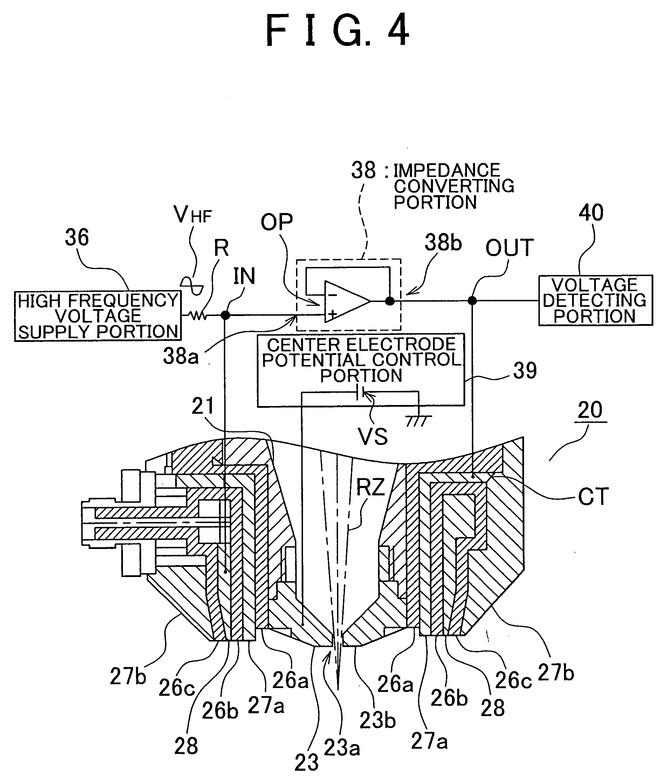

Fig.4 is a schematic circuit diagram in the surroundings of the impedance converting portion 38 and the center electrode potential control portion 39. In order to easily understand the invention, only necessary elements are shown in Fig.4, so, the actual circuit is more complex and includes various kinds of active elements and passive elements.

The high frequency voltage supply portion 36 is provided with a high frequency power supply (not shown) , and the high frequency voltage supply portion 36 can output high frequency voltage V_{HF} the frequency of which is kH_{z} through MH_{z} order with the high frequency power supply.

The impedance converting portion 38 (in a frame with a broken line) is provided with an operational amplifier OP, and the impedance converting portion 38 functions as a voltage follower if an output terminal of the operational amplifier OP is connected with a reverse input terminal (minus terminal) of the operational amplifier OP without locating a resistance therebetween. That is, the amplification factor of the impedance converting portion 38 is almost one (1) , and the impedance converting portion 38 has an input portion 38a, input impedance of which is infinity (∞) , and an output portion 38b output impedance of which is zero (0) . The input impedance infinity (∞) and the output impedance zero (0) means that the relation between the input impedance and the output impedance is an approximative relation of infinity (∞) and zero (0) .

The high frequency voltage supply portion 36 is connected with a proper resistance R, and is respectively connected with the sensor electrode 28 and the input portion 38a of the impedance converting portion 38 through a junction IN. And, the output portion 38b of the impedance converting portion 38 is respectively connected with the first guard electrode 27a and the voltage detecting portion 40 through a junction OUT. The output portion 38b is connected with the second guard electrode 27b through the first guard electrode 27b since the first guard electrode 27a is electrically connected with the second guard electrode 27b through the contacting portion CT, as mentioned before.

The center electrode potential control portion 39 is provided with a constant voltage power supply VS, and the constant voltage power supply VS is earthed. That is, the center electrode potential control portion 39 is comprised so that it can output constant positive voltage to the center electrode 23, or it can earth the center electrode 23 in case of 0V (in case where it outputs no voltage).

In order to machine the workpiece 60 with the laser beam machine 1 having the above-mentioned structure, an operator firstly put the workpiece 60 to be machined on the workpiece location surface 3a, as shown in Fig.1. And, the operator boots the laser beam 1 through a booting switch (not shown) owned by the control unit 1c, so that earthing process means is actuated and the located workpiece 60 is earthed. When the operator inputs a machining instruction on the basis of a machining condition, such as material and board thickness, and a predetermined machining shape, through the input portion 31, such as a keyboard, the main control portion 30 instructs the machining control portion 32 to execute the control according to the machining instruction, receiving the instruction.

The machining control portion 32 drives and controls driving motors (not shown) for respective axes, so that the torch 20 is moved and driven in predetermined axial directions in the X-, Y-, Z-axes , so as to locate the torch 20 at a predetermined position (such as a piercing point) . Then, the laser beam oscillator (not shown) is driven so as to eject the laser beam RZ. The ejected laser beam RZ is radiated on the workpiece 60 through the laser beam path tube 7, the machining head body (not shown), the outside sleeve member 9, the rotating top end member 10, and the torch 20. Besides, the assist gas evolution means (not shown) is actuated together with radiation of the laser beam RZ , and assist gas is discharged to the workpiece 60.

When the laser beam RZ is thus radiated on the workpiece 60, the machining control portion 32 relatively moves the torch 20 with respect to the workpiece 60 along a machining form according to the machining instruction by properly rotating, driving and positioning the base 3, the saddle 6, the machining head body, the outside sleeve member 9, the rotating top end member 10. At this time, a surface following control for keeping a gap length GAP between the top end of the torch 20 and the workpiece 60 in an almost constant state is executed together with the movement of the torch 20.

Fig. 5 is a view showing surface following control according to the invention, and is an explanation view at the time when the center electrode 23 is earthed. As shown in Fig.5, the sensor electrode 28 faces the workpiece 60, and the annular sensor electrode 28 as shown in Fig.2 (b) and the workpiece 60 facing this elelctrode 28 function as facing electrodes for a condenser, so that capacitance C_{GAP} is generated between both. So, the resistance R and the capacitance C_{GAP} comprise a series circuit with respect to the high frequency voltage supply portion 36 since the workpiece 60 is earthed by the earthing process means.

On the other hand, capacitance Ca is generated between the first guard electrode 27a and the workpiece 60, similar to the capacitance C_{GAP}, and capacitance Cb is generated between the second guard electrode 27b and the workpiece 60. So, the capacitance Ca and the capacitance Cb comprise a parallel circuit with respect to the output portion 38b of the impedance converting portion 38.

If the high frequency voltage supply portion 36 outputs the high frequency voltage V_{HF} in the above-mentioned state, the high frequency voltage V_{HF} is inputted in the sensor electrode 28 through the resistance R. Since the resistance R and the capacitance C_{GAP} comprises a series circuit as mentioned before, the potential V_{IN} in the junction IN corresponds to the voltage drop of the capacitance C_{GAP}, and is the voltage a predetermined voltage value lower and predetermined phase shifted in comparison with the high frequency voltage V_{HF} ("the voltage V_{GAP}" hereinafter) .

The voltage V_{GAP} is inputted in the input portion 38a of the impedance converting portion 38, and this voltage V_{GAP} is outputted as potential V_{OUT} in the junction OUT as it is since the amplification factor of the impedance converting portion 38 is almost one (1). The outputted voltage V_{GAP} is respectively inputted in the first guard electrode 27a and the second guard electrode 27b since the capacitance Ca and the capacitance Cb comprises a series circuit as mentioned before.

That is, the voltage V_{GAP} inputted in the first guard electrode 27a, the second guard electrode 27b and the sensor electrode 28 is the same phase, so that a line of electric force F_{GAP} from the sensor electrode 28 flows into the facing workpiece 60 without flowing into the adjacent guard electrodes 27a, 27b (that is, without newly generating capacitance different from the capacitance C_{GAP}). Besides, the inputted voltage V_{GAP} is the same voltage value, so that the line of electric force F_{GAP} is respectively parallel to a line of electric force FLa from the first guard electrode 27a and a line of electric force FLb from the second guard electrode 27b which are adjacent to the line of electric force F_{GAP} without flowing into the workpiece 60 broadening from the sensor electrode 28.

Then, the surface of the workpiece 60 in a normal direction with respect to the sensor electrode 28 as shown in Fig.2(b), that is, the portion of the workpiece 60 on which the annular electrode is projected functions as the facing electrode of the capacitance C_{GAP} on the workpiece 60 side. Then, the sectional area of the facing electrode in the capacitance C_{GAP} (the area of the above-mentioned annular electrode) is almost constant, so that the capacitance C_{GAP} changes only according to the gap length GAP as shown in Fig.5 (that is, the minimum distance between the sensor electrode 28 and the workpiece 60).

The relation is that the capacitance C_{GAP} becomes smaller (the voltage V_{GAP} becomes bigger) when the gap length GAP becomes bigger, and the capacitance C_{GAP} becomes bigger (the voltage V_{GAP} becomes smaller) when the gap length GAP becomes smaller. That is, in order to execute the surface following control, predetermined voltage V_{GAP} according to a predetermined gap length GAP ("the standard voltage value" hereinafter) is set in advance and the voltage V_{GAP} is detected so as to amend the difference with respect to the standard voltage value during the control of the movement of the torch 20.

The voltage detecting portion 40 always detects the potential V_{OUT} during the control of the movement of the torch 20. When the V_{GAP} outputted from the output portion 38b of the impedance converting portion 38 is inputted in the voltage detecting portion 40, the portion 40 detects this and outputs the detected result to the displacement volume computing portion 33.

The sensor electrode 28 is an annularly formed electrode in this embodiment. But, it is not always necessary to be a continuous "annulus" as shown in Fig.2 (b) , but may be a discontinuous "annulus". For instance, a predetermined number of notches (one, two or three, for instance) may be formed on the sensor electrode 28 as shown in Fig.2(b) or the divided sensor electrodes may be annularly arranged.

A table having standard voltage values corresponding to the gap length GAP to be set is prepared in the standard voltage memory 35. The displacement volume computing portion 33 accesses the table from the standard voltage memory 35 at the time of start of the surface following control, and sets the standard voltage value corresponding to the gap length GAP to be set on the basis of the machining condition (such as material and board thickness) inputted by the operator.

The displacement volume computing portion 33 computes a voltage value V corresponding to a difference with respect to a standard voltage value on the basis of the detected result received from the voltage detecting portion 40. The displacement volume of the torch 20 with respect to the gap length GAP is computed from a relational expression between the voltage value V and the displacement volume of the torch 20 with respect to the gap length GAP (that is, a displacement angle of the servo motor 37a) on the basis of the computed voltage value V, and the computed displacement volume of the torch 20 is outputted to the servo motor driving control portion 37. Thereafter, the servo motor driving control portion 37 controls to drive the servo motor 37a a predetermined displacement angle according to the displacement volume of the torch 20. Then, the torch 20 is moved in the upper or the lower direction of Fig.5 and is positioned, so that the gap length GAP is almost constantly kept.

When thus executing the surface following control, the displacement volume of the torch 20 is immediately computed by the displacement volume computing portion 33 according to undulations on the surface of the workpiece 60 and the torch 20 is thus moved and positioned so as to almost constantly keep the gap length GAP by the servo motor 37a . Therefore, the focal point of the laser beam RZ is kept at a predetermined position to be focused (such as a machining point P as shown in Fig. 5) on the workpiece 60.

For execution of the above-mentioned surface following control, the guard electrodes 27a, 27b are not always necessary to be provided, but the sensor electrode 28 may be formed with an insulating member without providing the guard electrodes 27a, 27b at the inside and outside peripheries thereof although the accuracy of the surface following control is reduced.

During the radiation of the laser beam RZ on the workpiece 60, the workpiece 60 fuses in the machining point P as shown in Fig.5. For this reason, plasma PZ comprised of charged particles, such as an ion and an electron e, is generated between the torch 20 and the workpiece 60.

As mentioned above, the line of electric force FLa intervenes between the plasma PZ and the capacitance C_{GAP}. Therefore, a line of electric force FL_{GAP} from the sensor electrode 28 does not flow into the plasma PZ (that is, the capacitance C_{GAP} does not change) , but the line of electric force FLa flows into the plasma PZ. Then, the capacitance Ca changes. But, the voltage detecting portion 40 can detect the voltage V_{GAP} according to the gap length GAP without receiving the influence of the variation of the capacitance Ca on the voltage V_{GAP} since the impedance converting portion 38 functioning as a voltage follower intervenes between the capacitance Ca and the capacitance C_{GAP}- By doing so, it is possible to control so as to almost constantly keep the gap length GAP even if the plasma PZ is generated. In this embodiment, the impedance converting portion 38 is the voltage follower, but the amplification factor is not always one (1) so long as the input impedance is infinity (∞) and the output impedance is zero (0).

Besides, it is possible to prevent the charged particles in the plasma PZ, such as an ion and an electron e, from approaching the first guard electrode 27a without giving the charged particles Coulomb's force in a constant direction since the line of electric force FLa is generated by the high frequency voltage by the voltage V_{GAP}. For this reason, the capacitance C_{GAP} can be excluded from the plasma PZ, restricting the charged particles in a space between the torch 20 and the workpiece 60.

As mentioned before, the line of electric force FLb is generated from the second guard electrode 27b around the outer periphery of the capacitance C_{GAP}. When the torch 20 approaches an oblique portion 60a (two-dot chain line) of the workpiece 60 as shown in Fig.5, the line of electric force FL_{GAP} from the sensor electrode 28 does not flow into the oblique portion 60a (that is, the capacitance C_{GAP} is not changed) , but the line of electric force FLb flows into the oblique portion 60a. Therefore, the capacitance Cb changes, but the voltage detecting portion 40 can detect the voltage V_{GAP} according to the gap length GAP even if there is an undulation, such as the oblique portion 60a on the workpiece 60 without receiving an influence owing to the variation of the capacitance Cb by the impedance converting portion 38, similar to the above-mentioned.

The capacitance C_{GAP} is excluded from the plasma PZ, and the above-mentioned surface following control is thus executed, functioning normally. Suppose that a large volume of the plasma PZ is generated between the torch 20 and the workiece 60, the line of electric force FLa by the high frequency voltage can not restrict the plasma PZ in the space between the torch 20 and the workpiece 60, and the plasma PZ is dispersed in the space. Thereafter, the plasma PZ approaches the line of electric force FLa, and attracts much of the line of electric force FLa therein. Then, the line of electric force FL_{GAP} from the sensor electrode 28 flows to the plasma PZ, so that the capacitance C_{GAP} changes, and the surface following control does not normally function, thereby.

Under this situation, the laser beam machine 1 according to the invention is for realizing normal surface following control function in such a manner that the charged particles of the plasma PZ are absorbed so that the plasma PZ does not approach the line of electric force FLa for restriction of the dispersion of the plasma PZ even if a large volume of the plasma PZ is generated.

That is, the center electrode 23 is connected with the center electrode potential control portion 39, as shown in Fig.5, and the center electrode potential control portion 39 is actuated together with the start of the above-mentioned surface following control. The center electrode potential control portion 39 controls to earth the center electrode 23 without outputting voltage. Then, the whole plasma opposed face 23b of the center electrode 23 enters in a state that the potential is zero (0), so that the center electrode potential control portion 39 absorb (earth) the charged particles , such as an electron e, on the plasma opposed face 23b through the face 23b. The charged particles are absorbed when the plasma PZ is in a contact with the plasma opposed face 23b or when the plasma PZ electrifies the plasma opposed face 23b, for instance.

The dispersion of the plasma PZ in the space between the torch 20 and the workpiece 60 can be thus restricted since the charged particles, such as the electron e, are absorbed in order through the plasma opposed face 23b during the execution of the above-mentioned surface following control. Then, the line of electric force FLa is prevented frombeing attracted in the plasma PZ even if a large volume of plasma PZ is generated, and the surface following control can normally function.

The plasma opposed face 23b of the center electrode 23 is concentrically formed with the opening 23a for the laser beam RZ as its center, as shown in Fig.2 (b) . Therefore, the dispersion of the plasma PZ can be effectively restricted by absorbing the charged particles of the plasma PZ concentrically dispersed from the machining point P.

The method of absorbing the charged particles by the center electrode potential control portion 39 is to earth the center electrode 23 in the embodiment. But, the potential of the center electrode 23 may be controlled to keep positive voltage in order to do so. Fig.6 is a view showing the surface following control according to the invention and is an explanation view in case where the center electrode 23 is controlled to keep a positive potential.

As mentioned before, the charged particles in the plasma PZ are electrons e and, plus ions and minus ions. The electron e is easy to be dispersed in comparison with the ion since its mass is smaller, so that it is broadly dispersed in the space between the torch 20 and the workpiece 60. In the end, it is effective to absorb the electrons e of the charged particles for restriction of the dispersion of the plasma PZ.

That is, the center electrode potential control portion 39 outputs 5v of voltage, for instance, as shown in Fig.6. Then, the whole plasma opposed face 23b of the center electrode 23 enters in such a state that the voltage is 5v, that is, the positive. Therefore, the center electrode potential control portion 39 generates Coulomb's force facing the plasma opposed face 23b on the electrons e (and minus ions) of the plasma PZ dispersed in the space between the torch 20 and the workpiece 60 in addition to the electrons e (and minus ions) on the plasma opposed face 23b so as to absorb (earth) through the plasma opposed face 23b.

When controlling the potential of the center electrode 23 so as to keep the positive voltage, the charged particles dispersed in the space between the torch 20 and the workpiece 60 can be absorbed, and the dispersion of the plasma PZ can be further restricted, thereby.

When the center electrode potential control portion 39 thus controls the potential of the center electrode 23 so as to keep the positive constant voltage during the execution of the surface following control, the dispersion of the plasma PZ is restricted, and the surface following control normally functions, so that the focus of the laser beam RZ can be always kept at the predetermined position on the workpiece 60 to be focused.

The present invention has been explained on the basis of the example embodiments discussed. Although some variations have been mentioned, the embodiments which are described in the specification are illustrative and not limiting. The scope of the invention is designated by the accompanying claims and is not restricted by the descriptions of the specific embodiments. Accordingly, all the transformations and changes within the scope of the claims are to be construed as included in the scope of the present invention.

## Claims

1. A laser beam machine having laser beam radiating means for radiating laser beam on a workpiece, said laser beam radiating means having an opening for said laser beam and an annular electrode facing said workpiece provided at an outer periphery of said opening, said laser beam machine further having gap length control means for controlling gap length between said laser beam radiating means and said workpiece on the basis of capacitance generating between said annular electrode and said workpiece, comprising:
said laser beam radiating means having a center electrode at an inner periphery of said annular electrode; and
center electrode potential control means for controlling potential of said center electrode so as to keep zero (0) or a positive constant voltage.

2. The laser beam machine according to claim1, wherein the center electrode has a workpiece facing surface concentrically formed with said opening for said laser beam as its center.

3. The laser beam machine according to claim 1, wherein said laser beam radiating means has a first guard annular electrode which intervenes between said center electrode and said annular electrode, an impedance converting means is provided, having an input portion input impedance of which is infinity (∞) for connecting with said annular electrode and an output portion output impedance of which is zero (0) for connecting with said first guard annular electrode, and high frequency voltage supply means for supplying said annular electrode with high frequency voltage is provided.

4. The laser beam machine according to claim 3, wherein said laser beam radiating means has a second guard annular electrode which is connected with said output portion of said impedance converting means at an outer periphery of said annular electrode.

5. A laser beam machine having laser beam radiating portion for radiating laser beam on a workpiece, said laser beam radiating portion having an opening for said laser beam and an annular electrode facing said workpiece provided at an outer periphery of said opening, said laser beam machine further having gap length control unit for controlling gap length between said laser beam radiating portion and said workpiece on the basis of capacitance generating between said annular electrode and said workpiece, comprising:
said laser beam radiating portion having a center electrode at an inner periphery of said annular electrode; and
center electrode potential control unit for controlling potential of said center electrode so as to keep zero (0) or a positive constant voltage.

6. The laser beam machine according to claim 5, wherein the center electrode has a workpiece facing surface concentrically formed with said opening for said laser beam as its center.

7. The laser beam machine according to claim 5, wherein said laser beam radiating portion has a first guard annular electrode which intervenes between said center electrode and said annular electrode, an impedance converting unit is provided, having an input portion input impedance of which is infinity (∞) for connecting with said annular electrode and an output portion output impedance of which is zero (0) for connecting with said first guard annular electrode, and high frequency voltage supply unit for supplying said annular electrode with high frequency voltage is provided.

8. The laser beam machine according to claim 7, wherein said laser beam radiating portion has a second guard annular electrode which is connected with said output portion of said impedance converting unit at an outer periphery of said annular electrode.
